# EUROPÄISCHE PATENTSCHRIFT

(11) **EP 3 544 891 B1**
(45) Veröffentlichungstag und Bekanntmachung des Hinweises auf die Patenterteilung: **04.06.2025**
(21) Anmeldenummer: 17807998.4
(22) Anmeldetag: 21.11.2017
(51) Int. Cl.: B63G 8/00, H02G 1/00

(54) **UNTERWASSERFAHRZEUG MIT DRUCKBEHÄLTER**
UNDERWATER CRAFT COMPRISING A PRESSURE VESSEL
VÉHICULE SOUS-MARIN DOTÉ D'UN COMPARTIMENT PRESSURISÉ

(30) Priorität: 23.11.2016 DE 102016122597
(43) Veröffentlichungstag der Anmeldung: 02.10.2019
(73) Patentinhaber: ATLAS ELEKTRONIK GmbH, 28309 Bremen (DE)
(72) Erfinder: HECHT, Markus, 27721 Ritterhude (DE); MICHAELIS, Ulrike, 28816 Stuhr (DE); WOLK, Klaus-Dieter, 28832 Achim (DE)
(74) Vertreter: thyssenkrupp Intellectual Property GmbH
(86) Internationale Anmeldenummer: PCT/DE2017/101002
(87) Internationale Veröffentlichungsnummer: WO 2018/095483

(56) Entgegenhaltungen:
- EP-A1- 2 546 925
- EP-A2- 2 077 226
- DE-A1- 102004 032 475
- DE-A1- 102011 009 283

## Beschreibung

Die Erfindung betrifft ein Unterwasserfahrzeug, mit einem Druckbehälter, welcher einen Innenbereich und einen Außenbereich aufweist, wobei eine elektronische Durchkontaktierung elektronische Komponenten im Außenbereich mit elektronischen Komponenten im Innenbereich elektronisch verbindet. Ein Unterwasserfahrzeug nach dem Stand der Technik ist beispielsweise in Dokument EP2546925 offenbart.

Ein elektromagnetischer Impuls oder auch elektromagnetischer Puls (EMP) bezeichnet eine kurzzeitige breitbandige elektromagnetische Strahlung, welche bei einem einmaligen, hochenergetischen Ausgleichsvorgang abgegeben wird. Dabei klingt ein energetisch hochangeregtes System unter Aussenden eines elektromagnetischen Impulses in den Grundzustand ab. Ursache dafür können elektrostatische Aufladungsprozesse bei Gewittern oder etwa Kernwaffenexplosionen sein. Durch die Wechselwirkung von niederfrequenten elektromagnetischen Strahlungsanteilen mit freien Ladungsträgern in Metallen und Halbleitern werden dort starke, kurzzeitig schwankende Ströme induziert. In nicht oder nur unzureichend abgeschirmten elektrischen beziehungsweise elektronischen Geräten könnten diese zu Fehlfunktionen bis hin zum Totalausfall oder sogar zur Zerstörung einzelner elektronischer Bauteile führen.

Insbesondere bei U-Booten werden außerbords angeordnete Sensoren oder Aktuatoren mit elektronischen Geräten im Inneren des U-Bootes verbunden. Ein typisches Beispiel hierfür ist ein aktives Sonar, welches außenbordig Mikrofone und im Inneren (Auswerte-)Rechner aufweist, welche die entsprechenden gewonnenen Signale auswertet. Um derartige Sonare vor einem elektromagnetischen Impuls zu schützen, wird innerhalb eines Druckkörpers eines U- Bootes befindliche Elektronik durch sogenannte Suppressordioden geschützt.

Damit einher geht, dass jedes elektronische Bauteil im Inneren des U-Bootes selbst gegen den elektromagnetischen Puls geschützt werden muss, da es dem elektromagnetischen Puls grundsätzlich gelingt über etwaige Durchkontaktierungen in das Innere des U-Bootes zu gelangen.

Aufgabe der Erfindung ist es den Stand der Technik zu verbessern.

Die Aufgabe wird gelöst durch ein Unterwasserfahrzeug mit einem Druckbehälter, welches einen Innenbereich und einen Außenbereich aufweist, wobei eine elektronische Durchkontaktierung eine elektronische Komponenten im Außenbereich mit elektronischen Komponenten im Innenbereich elektronisch verbindet, wobei im Außenbereich eine Überspannungsschutzeinrichtung der Durchkontaktierung zugeordnet ist, sodass in einem Überspannungsfall eine Überspannung außerhalb des Druckbehälters verbleibt.

Somit kann im Inneren des U- Bootes auf das Schützen jedes einzelnen Gerätes gegenüber Überspannungen (durch den elektromagnetischen Puls verursacht) verzichtet werden. Dies reduziert die einzusetzenden Bauteile deutlich, da quasi die "Einfallstore" für den EMP schon geschützt werden.

Auch können bisherige Unterwasserfahrzeuge mit solch einem System einfach nachgerüstet werden. Dies kann beispielsweise dadurch erfolgen, dass der Überspannungsschutz mittels eines Steckers außenbordig ein Teil der Durchkontaktierung bildet.

Folgendes Begriffliche sei erläutert:
Ein "Unterwasserfahrzeug" ist insbesondere ein U- Boot oder ein AUV (Autonomous Underwater Vehicle) oder ein ROV (Remotely Operated Vehicle).

Der "Druckbehälter" stellt in einem Tauchfall einen vor Wasser eindringenden geschützten Raum bereit, in welchem Elektronik angeordnet und verwendet sein kann. Bei einem U-Boot ist dies insbesondere der Bereich, welcher beim Tauchen durch das entsprechende Personal "bewohnt" wird. Somit sind elektronische Bauteile und/oder die Räume für Personen im "Innenbereich" des Druckbehälters angeordnet.

Der "Außenbereich" des Druckbehälters ist der Bereich des Unterwasserfahrzeuges, welcher grundsätzlich in getauchtem Zustand mit Wasser in Berührung kommen kann. Insbesondere sind in diesem Außenbereich Hydrophone eines aktiven oder passiven Sonars angeordnet.

Die "elektronische Durchkontaktierung" ist insbesondere eine kabelbasierte oder leitungsbasierte Verbindung der im Außenbereich angeordneten Hydrophone und der im Innenbereich angeordneten elektronischen Auswerteeinheiten. Dabei kann die elektronische Durchkontaktierung einzelne Segmente mit Steckern und dergleichen aufweisen, sodass beispielsweise durch das Austauschen eines Steckers und das Einfügen eines Steckers mit entsprechendem Überspannungsschutzeinrichtungen ein Nachrüsten von Unterwasserfahrzeugen ermöglicht ist.

"Elektronische Komponenten" sind sämtliche elektrische oder elektronische Bauteile, welche durch Strom und/ oder Spannung betreibbar oder abfragbar sind. Insbesondere können derartige elektronische Komponenten auch Halbleiterbauteile wie Transistoren oder Computerchips und dergleichen aufweisen.

Die "Überspannungsschutzeinrichtung" ist eine elektronische Schaltung, welche die maximale Spannungshöhe, welche in einem elektronischen System entstehen kann, auf eine bestimmte Maximalspannung begrenzt.

In einer weiteren Ausführungsform ist im Außenbereich ein wasserdichter Behälter mit einem Behältergehäuse angeordnet, in welchem die Überspannungsschutzeinrichtung wasserdicht verortet ist.

Somit kann vorteilhafterweise verhindert werden, dass die Überspannungsschutzeinrichtung somit mit dem meist leitendem Umgebungswasser in Berührung gerät, welche bei Kontakt zur Folge hätte, dass die Funktion der Überspannungsschutzeinrichtung nicht mehr gewährleistet wäre. Somit ist in dieser Ausführungsform quasi ein weiterer "(deutlich kleiner) Druckbehälter" vorgesehen, in dem eine Überspannungsschutzeinrichtung angeordnet sein kann.

Um im einem Einsatzfall die beispielsweise nach einem Überspannungsereignis zerstörte Überspannungsschutzeinrichtung auszutauschen, kann in einer diesbezüglichen Ausführungsform der wasserdichte Behälter einen Verschluss aufweisen, sodass die Überspannungsschutzeinrichtung leicht zugänglich ist. Dies kann beispielsweise mittels eines Drehverschlusses realisiert werden, bei dem an den Übergängen ein O-Ring zum Abdichten gegenüber dem Umgebungswasser angeordnet ist.

Aufgrund dessen, dass die Überspannungsschutzeinrichtung häufig gegen elektronische Masse geschaltet wird, kann somit der Behälter selbst einen elektronischen Massekontakt aufweisen. Dies kann beispielsweise dadurch erreicht werden, dass der Behälter selbst vollständig oder zumindest teilweise elektrisch leitendes Material aufweist, welches mit der elektronischen Masse des Unterwasserfahrzeugs elektrisch leitend verbunden ist.

In einer weiteren Ausführungsform schaltet die Überspannungsschutzeinrichtung elektronisch mittels des wasserdichten Behälters die Durchkontaktierung auf elektronische Masse. Somit kann an bestehenden Durchkontaktierungen und somit an den diese realisierenden Leitungen die Überspannungsschutzeinrichtung (auch im Nachrüstungsfall) angeordnet werden.

Um zu gewährleisten, dass die Überspannungsschutzeinrichtung selbst einen effektiven Massekontakt etabliert, kann der wasserdichte Behälter und/ oder die Überspannungsschutzeinrichtung einen Kontaktstift aufweisen, welcher in einem Verschlussfall des Behälters eine elektronische Massebeschaltung zwischen der Überspannungsschutzeinrichtung und dem wasserdichten Behälter realisiert.

In einer weiteren Ausführungsform weist die Überspannungsschutzeinrichtung eine Suppressordiode, insbesondere eine Transient- Absorption- Zener- Diode auf. Insbesondere wenn derartige Dioden zwischen einer Durchkontaktierung und Masse geschaltet werden, können Überspannungen auf bestimme Maximalwerte von Spannungen begrenzt werden. Und somit kann ein effektiver EMP-Schutz gewährleistet werden.

Um die Überspannungsschutzeinrichtung im Defektfall durch eine andere Überspannungsschutzeinrichtung schnell austauschen zu können, kann zwischen der elektronischen Durchkontaktierung unter der Überspannungsschutzeinrichtung ein Adapter zur mechanischen Aufnahme und elektronischen Kontaktierung der Überspannungsschutzeinrichtung angeordnet sein. Auch kann der Adapter für andere elektronische Schaltungen eingesetzt werden oder weitere elektronische Schaltungen aufweisen.

Um unterschiedliche Funktionalitäten entsprechend einem Kauf oder Lizenzmodell einem potenziellen Kunden anbieten zu können, kann die Überspannungsschutzeinrichtung eine Kopierschutzeinheit, insbesondere einen Kopierschutzstecker, aufweisen. Dieser kann dabei selbstverständlich auch als separates Bauteil vorgesehen werden, welches beispielsweise in dem Adapter angeordnet wird. So kann beispielsweise ein Sonar ausgeliefert werden, welches sowohl aktiv als auch passiv arbeiten kann, wobei erst zu einem späteren Zeitpunkt die für die aktiven Sonare wichtigen Bestandteile mittels des Kopierschutzes freigeschaltet werden.

Um eine Dichtigkeitsprüfung des wasserdichten Behälters insbesondere nach einem Austausch oder Prüfung der Überspannungsschutzeinrichtung durchzuführen kann der wasserdichte Behälter einen Behälterkammer und ein Behälteraußenbereich aufweisen, wobei eine Fluidverbindung die Behälterkammer mit dem Behälteraußenbereich verbindet. Wird nun über die Fluidverbindung Druck (z.B. mittels Pressluft) der Behälterkammer aufgeprägt, kann über Leckraten die Dichtigkeit des wasserdichten Behälters geprüft werden.

In einer diesbezüglichen Ausführungsform kann die Behälterkammer eine zusätzliche, separate Prüfkammer aufweisen, sodass neben der Prüfkammer eine übrige Behälterkammer vorgesehen ist, und die Fluidverbindung die Prüfkammer mit dem Behälteraußenbereich verbindet. Insbesondere ist ein Prüfkammervolumen deutlich keiner als die übrige Behälterkammer. Das Verhältnis von Prüfkammer zur übrigen Behälterkammer ist insbesondere kleiner 1 : 5 und besonders bevorzugt kleiner 1 : 10. Je besser das Verhältnis ist, desto schneller kann eine Dichtigkeitsprüfung erfolgen. Zudem kann dabei auch die Dichtigkeit zwischen Prüfkammer und übriger Behälterkammer geprüft werden.

Um sowohl die Dichtigkeit zum Verschluss als auch zur übrigen Behälterkammer zu prüfen, kann die zusätzliche, separate Prüfkammer zwischen dem Verschluss und der übrigen Behälterkammer angeordnet sein. So kann ein O-Ring zum Verschluss und ein weiterer O-Ring die übrige Behälterkammer abdichten.

In einer weiteren Ausführungsform weist die Fluidverbindung ein Ventil auf. So kann die Fluidverbindung abgedichtet und eine Prüfung realisiert werden. Dabei kann sowohl ein Einwegeventil als auch ein schaltbares Ventil vorgesehen sein.

Um im Einsatzfall eines U-Bootes die Überspannungsschutzeinrichtung effektiv im Einsatz austauschen zu können, kann der Behälter in einem oberen Bereich des Unterwasserfahrzeuges angeordnet sein, sodass in einem Auftauchfall die Überspannungsschutzeinrichtung frei von Wasserbenetzung austauschbar und/ oder zugänglich ist. Somit reicht ein kurzes Auftauchen, um entsprechend schnell die entsprechenden Bauteile auszutauschen. Ein Aufsuchen einer Werft oder dergleichen ist dabei nicht notwendig.

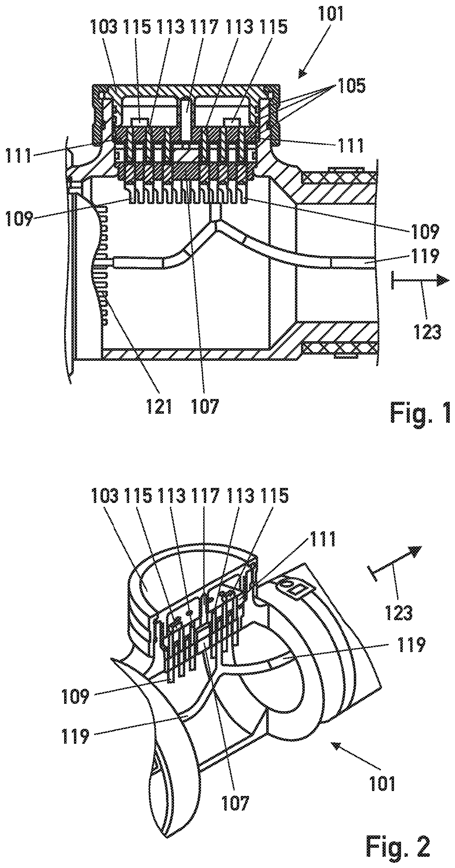

Im Weiteren wird die Erfindung anhand von Ausführungsbeispielen erläutert. Es zeigen
- Figur 1: eine schematische Schnittdarstellung durch einen Behälterstecker, in welchem in einem Adapter eine EMP-Schutzschaltung auf einer Platine steckbar angeordnet ist, in einem geschlossenen Behälterzustand,
- Figur 2: eine schematische, perspektivische, dreidimensionale geschnittene Darstellung des Behältersteckers aus Figur 1 und

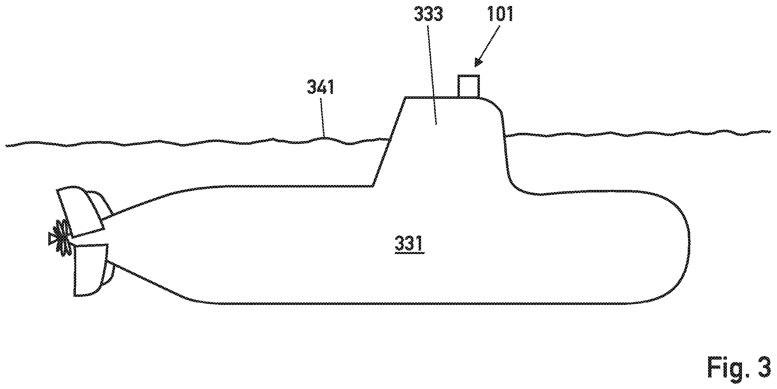

- Figur 3: eine stark schematische Darstellung eines teilgetauchten U-Bootes mit einem Behälterstecker gemäß Figur 1

Ein Steckerhäuse 101 weist in seinem oberen Bereich einen Deckel 103 auf. Zwischen dem Steckergehäuse 101 und dem Deckel 103 sind Gewinde (nicht dargestellt) angeordnet, sodass der Deckel mittels Drehen reversibel auf das Steckergehäuse 101 aufbringbar ist. Zudem sind O-Ringe 105 angeordnet, welche das Eindringen von Wasser von Außen in das Steckergehäuseinnere vermeiden.

Im Inneren des Steckergehäuses 101 ist eine Platinenaufnahme 107 angeordnet, welche mehrere Kontaktierstifte 109 aufweist, an welche ein Signalkabel 119 angelötet ist. Zudem ist im Inneren des Steckergehäuses 101 eine Platine 111 mit TVS-Dioden 115 und Stiftkontakten angeordnet. Die Platine 111 wurde mittels der Stiftkontakte 113 in die Platinenaufnahme 107 eingedrückt, sodass eine elektronische Verbindung gegeben ist.

Weiterhin weist der Deckel 103 einen Kontaktbolzen 117 auf, welcher im verschlossenen Zustand eine elektronische Masseleitung mit der Platinenaufnahme 107 realisiert.

Das Signalkabel 119 verbindet Hydrophone (nicht dargestellt) und somit die Hydrophonseite 123 mit der Innenbordkontaktierung 121 welche in das Innere des U-Boots 331 und dort in eine Sonaranlage (nicht dargestellt) weitergeführt wird.

Die TVS-Dioden 115 sind parallel zum Signalkabel 119 geschaltet. Mithin schalten somit die TVS-Dioden 115 das Signalkabel 119 über den Kontaktbolzen 117 und den Deckel 103 des Steckergehäuses 101 auf elektronische Masse.

Tritt nun ein EMP-Ereignis ein, wirkt die gesamte vorliegende elektronische Schaltung quasi als Antenne und es werden hohe Spannungen induziert. Wird nun die mittels der TVS-Dioden 115 eingestellte Spannungsschwelle überschritten, werden die TVS-Dioden 115 leiten und somit wird die Überspannung auf Masse geleitet und gelangt nicht in das Innere des U-Bootes und kann somit innerhalb des U-Boots keinen Schaden anrichten.

Nach Eintritt dieses EMP-Ereignisses und den dadurch gegebenenfalls zerstörten TVS-Dioden 115 soll vorliegend die Platine 111 ausgetauscht werden.

Dazu taucht das U-Boot 331 an die Wasseroberfläche 341 auf, sodass der Turm 333 aus dem Wasser ragt. Das Steckergehäuse 101 ist am Turm 333 des U- Bootes 331 angeordnet. Im aufgetauchten Fall öffnet eine Person den Ausstieg (nicht dargestellt) zum Turm und hat manuellen Zugriff zum Steckergehäuse 101. Nun dreht die Person den Deckel 103 vom Steckergehäuse 101 ab.

Anschließend wird die defekte Platine 111 von der Platinenaufnahme 107 abgezogen. Eine neue funktionstüchtige Platine 111 mit funktionsfähigen TVS-Dioden 115 wird an die gleiche Stelle der Platinenaufnahme 107 durch Drücken eingesteckt. Anschließend werden die O-Ringe 105 geprüft und gegebenenfalls durch neue O-Ringe ersetzt. Anschließend wird der Deckel 103 wieder fest verschraubt, sodass der Kontaktbolzen 117 wieder mit der Platine 111 leitend verbunden ist.

Alternativ wird eine andere Schaltung eingesetzt. In einer weiteren Alternative weist die Platine 111 eine Elektronik auf, welche das bestehende Sonarsystem (nicht dargestellt) verbessert. Zudem kann in die Platinenaufnahme 107 ein Dongel eingesetzt werden.

### Bezugszeichenliste

- 101: Steckergehäuse
- 103: Deckel
- 105: O-Ring
- 107: Platinenaufnahme
- 109: Kontaktierstifte
- 111: Platine
- 113: Stiftkontakte
- 115: TVS-Diode
- 117: Kontaktbolzen
- 119: Signalkabel
- 121: Innenbordkontaktierung
- 123: Hydrophon
- 331: U-Boot
- 333: Turm
- 341: Wasseroberfläche

## Patentansprüche

1. Unterwasserfahrzeug mit einem Druckbehälter, welcher einen Innenbereich und einen Außenbereich aufweist, wobei eine elektronische Durchkontaktierung elektronische Komponenten im Außenbereich mit elektronischen Komponenten im Innenbereich elektronisch verbindet, **dadurch gekennzeichnet, dass** im Außenbereich eine Überspannungsschutzeinrichtung der Durchkontaktierung zugeordnet ist, wobei die Überspannungsschutzeinrichtung eine elektronische Schaltung ist, welche die maximale Spannungshöhe im elektronischen System auf eine bestimmte Maximalspannung begrenzt, sodass in einem Überspannungsfall eine Überspannung außerhalb des Druckbehälters verbleibt.

2. Unterwasserfahrzeug nach Anspruch 1, **dadurch gekennzeichnet, dass** im Außenbereich ein wasserdichter Behälter mit einem Behältergehäuse angeordnet ist, in welchem die Überspannungsschutzeinrichtung wasserdicht verortet ist.

3. Unterwasserfahrzeug nach Anspruch 2, **dadurch gekennzeichnet, dass** der wasserdichte Behälter einen Verschluss aufweist, sodass die Überspannungsschutzeinrichtung austauschbar ist.

4. Unterwasserfahrzeug nach einem der Ansprüche 2 oder 3, **dadurch gekennzeichnet, dass** der wasserdichte Behälter, insbesondere mit seinem Behältergehäuse, elektronisch auf Masse geschaltet ist.

5. Unterwasserfahrzeug nach Anspruch 4, **dadurch gekennzeichnet, dass** die Überspannungsschutzeinrichtung elektronisch mittels des wasserdichten Behälters die Durchkontaktierung auf elektronischer Masse geschaltet ist.

6. Unterwasserfahrzeug nach Anspruch 4, **dadurch gekennzeichnet, dass** der wasserdichte Behälter und/oder die Überspannungsschutzeinrichtung einen Kontaktstift aufweist, welcher in einem Verschlussfall des Behälters eine elektronische Massebeschaltung zwischen der Überspannungsschutzeinrichtung und dem wasserdichten Behälter realisiert.

7. Unterwasserfahrzeug nach einem der vorherigen Ansprüche, **dadurch gekennzeichnet, dass** die Überspannungsschutzeinrichtung eine Suppressordiode, insbesondere eine Transient-Absorption-Zener-Diode, aufweist.

8. Unterwasserfahrzeug nach einem der vorherigen Ansprüche, **dadurch gekennzeichnet, dass** zwischen der elektronischen Durchkontaktierung und der Überspannungsschutzeinrichtung ein Adapter zur mechanischen Aufnahme und elektronischen Kontaktierung der Überspannungsschutzeinrichtung angeordnet ist.

9. Unterwasserfahrzeug nach einem der vorherigen Ansprüche, **dadurch gekennzeichnet, dass** die Überspannungsschutzeinrichtung eine Kopierschutzeinheit, insbesondere Kopierschutzstecker, aufweist.

10. Unterwasserfahrzeug nach einem der Ansprüche 2 bis 9, **dadurch gekennzeichnet, dass** der wasserdichte Behälter einen Behälterkammer und ein Behälteraußenbereich aufweist, wobei eine Fluidverbindung die Behälterkammer mit dem Behälteraußenbereich verbindet.

11. Unterwasserfahrzeug nach Anspruch 10, **dadurch gekennzeichnet, dass** die Behälterkammer eine zusätzliche, separate Prüfkammer aufweist, sodass neben der Prüfkammer eine übrige Behälterkammer vorgesehen ist, und die Fluidverbindung die Prüfkammer mit dem Behälteraußenbereich verbindet.

12. Unterwasserfahrzeug nach Anspruch 11, **dadurch gekennzeichnet, dass** die zusätzliche, separate Prüfkammer zwischen dem Verschluss und der übrigen Behälterkammer angeordnet ist.

13. Unterwasserfahrzeug nach einem der Ansprüche 10 bis 12, **dadurch gekennzeichnet, dass** die Fluidverbindung ein Ventil aufweist.

14. Unterwasserfahrzeug nach einem der Ansprüche 2 bis 13, **dadurch gekennzeichnet, dass** der Behälter in einem oberen Bereich des Unterwasserfahrzeugs angeordnet ist, sodass in einem Auftauchfall die Überspannungsschutzeinrichtung frei von Wasserbenetzung austauschbar und/oder zugänglich ist.

## Claims

1. Underwater vehicle with a pressure vessel, which has an inner area and an outer area, wherein an electronic through-connection electronically connects electronic components in the outer area with electronic components in the inner area, **characterised in that** in the outer area a surge protection device is associated with the through-connection, wherein the surge protection device is an electronic circuit, which limits the maximum voltage level in the electronic system to a specific maximum voltage, so that in the event of overvoltage, an overvoltage remains outside the pressure container.

2. Underwater vehicle according to claim 1, **characterised in that** a watertight container with a container housing is arranged in the outer area, in which the overvoltage protection device is located in a watertight manner.

3. Underwater vehicle according to claim 2, **characterised in that** the watertight container has a closure so that the surge protection device can be replaced.

4. Underwater vehicle according to one of claims 2 or 3, **characterised in that** the watertight container, in particular with its container housing, is electronically connected to ground.

5. Underwater vehicle according to claim 4, **characterised in that** the surge protection device is electronically switched to electronic ground by means of the watertight container via the through-contact.

6. Underwater vehicle according to claim 4, **characterised in that** the watertight container and/or the surge protection device has a contact pin which, when the container is closed, implements an electronic ground connection between the surge protection device and the watertight container.

7. Underwater vehicle according to one of the previous claims, **characterised in that** the surge protection device has a suppressor diode, in particular a transient absorption zener diode.

8. Underwater vehicle according to one of the previous claims, **characterised in that** an adapter for the mechanical accommodation and electronic contacting of the surge protection device is arranged between the electronic through-contact and the surge protection device.

9. Underwater vehicle according to one of the previous claims, **characterised in that** the surge protection device has a copy protection unit, in particular a copy protection plug.

10. Underwater vehicle according to one of the claims 2 to 9, **characterised in that** the watertight container has a container chamber and a container outer area, wherein a fluid connection connects the container chamber to the container outer area.

11. Underwater vehicle according to claim 10, **characterised in that** the container chamber has an additional, separate test chamber, so that an unoccupied container chamber is provided in addition to the test chamber, and the fluid connection connects the test chamber to the container outer region.

12. Underwater vehicle according to claim 11, **characterised in that** the additional, separate test chamber is arranged between the closure and the remaining container chamber.

13. Underwater vehicle according to one of claims 10 to 12, **characterised in that** the fluid connection has a valve.

14. Underwater vehicle according to one of the claims 2 to 13, **characterised in that** the container is arranged in an upper region of the underwater vehicle, so that in the event of surfacing, the surge protection device can be replaced and/or accessed without being wetted by water.

## Revendications

1. Véhicule sous-marin avec un réservoir sous pression, qui présente une zone intérieure et une zone extérieure, une traversée électronique reliant électroniquement des composants électroniques dans la zone extérieure à des composants électroniques dans la zone intérieure, **caractérisé en ce qu'**un dispositif de protection contre les surtensions est associé à la traversée dans la zone extérieure, le dispositif de protection contre les surtensions étant un circuit électronique qui limite la tension maximale dans le système électronique à une tension maximale donnée, de sorte qu'en cas de surtension, une surtension reste à l'extérieur du conteneur sous pression.

2. Véhicule sous-marin selon la revendication 1, **caractérisé en ce qu'**un conteneur étanche à l'eau est disposé à l'extérieur avec un boîtier de conteneur dans lequel le dispositif de protection contre les surtensions est placé de manière étanche à l'eau.

3. Véhicule sous-marin selon la revendication 2, **caractérisé en ce que** le conteneur étanche à l'eau présente une fermeture, de sorte que le dispositif de protection contre les surtensions est remplaçable.

4. Véhicule sous-marin selon l'une des revendications 2 ou 3, **caractérisé en ce que** le conteneur étanche à l'eau, en particulier avec son boîtier de conteneur, est mis à la masse électroniquement.

5. Véhicule sous-marin selon la revendication 4, **caractérisé en ce que** le dispositif de protection contre les surtensions est connecté électroniquement à la masse électronique par l'intermédiaire du conteneur étanche.

6. Véhicule sous-marin selon la revendication 4, **caractérisé en ce que** le conteneur étanche et/ou le dispositif de protection contre les surtensions comporte une broche de contact qui, en cas de fermeture du conteneur, réalise une mise à la masse électronique entre le dispositif de protection contre les surtensions et le conteneur étanche.

7. Véhicule sous-marin selon l'une des revendications précédentes, **caractérisé en ce que** le dispositif de protection contre les surtensions comprend une diode de suppression, en particulier une diode Zener à absorption transitoire.

8. Véhicule sous-marin selon l'une des revendications précédentes, **caractérisé en ce qu'**un adaptateur est disposé entre le contact électronique traversant et le dispositif de protection contre les surtensions pour la réception mécanique et le contact électronique du dispositif de protection contre les surtensions.

9. Véhicule sous-marin selon l'une des revendications précédentes, **caractérisé en ce que** le dispositif de protection contre les surtensions comporte une unité de protection contre la copie, en particulier une fiche de protection contre la copie.

10. Véhicule sous-marin selon l'une des revendications 2 à 9, **caractérisé en ce que** le conteneur étanche à l'eau comporte une chambre de conteneur et une zone extérieure de conteneur, une liaison fluidique reliant la chambre de conteneur à la zone extérieure de conteneur.

11. Véhicule sous-marin selon la revendication 10, **caractérisé en ce que** la chambre du conteneur comporte une chambre d'essai supplémentaire et séparée, de sorte qu'une chambre de conteneur restante est prévue en plus de la chambre d'essai, et **en ce que** la liaison fluidique relie la chambre d'essai à la zone extérieure du conteneur.

12. Véhicule sous-marin selon la revendication 11, **caractérisé en ce que** la chambre d'essai supplémentaire et séparée est disposée entre la fermeture et la chambre de conteneur restante.

13. Véhicule sous-marin selon l'une des revendications 10 à 12, **caractérisé en ce que** la liaison fluidique comporte une vanne.

14. Véhicule sous-marin selon l'une des revendications 2 à 13, **caractérisé en ce que** le réservoir est disposé dans une zone supérieure du véhicule sous-marin, de sorte que, en cas de remontée à la surface, le dispositif de protection contre les surtensions peut être remplacé et/ou est accessible sans être mouillé par l'eau.
